Europäisches Patentamt

European Patent Office

Office européen des brevets

(19)

(11) Veröffentlichungsnummer : **0 021 030**
**B1**

# (12) EUROPÄISCHE PATENTSCHRIFT

(45) Veröffentlichungstag der Patentschrift :
26.01.83

(21) Anmeldenummer : **80102778.0**

(22) Anmeldetag : **20.05.80**

(51) Int. Cl.³ : **F 16 C   3/02, F 04 D 29/04**

(54) **Welle aus Oxidkeramik.**

(30) Priorität : **07.06.79 DE 2923075**

(43) Veröffentlichungstag der Anmeldung :
**07.01.81 Patentblatt 81/01**

(45) Bekanntmachung des Hinweises auf die Patenterteilung : **26.01.83 Patentblatt 83/04**

(84) Benannte Vertragsstaaten :
**AT FR GB IT**

(56) Entgegenhaltungen :
**DE A 1 528 640**
**DE A 2 303 608**
**DE A 2 717 392**
**DE C 852 712**

(73) Patentinhaber : **Feldmühle Aktiengesellschaft**
**Fritz-Vomfelde-Platz 4**
**D-4000 Düsseldorf 11 (DE)**

(72) Erfinder : **Wloka, Gert**
**Bergstrasse 3**
**D-7302 Ostfildern 3 (DE)**

(74) Vertreter : **Uhlmann, Hans, Dr. rer. nat., Dipl.-Chem.**
**Gladbacher Strasse 189**
**D-4060 Viersen 1 (DE)**

EP 0 021 030 B1

## Welle aus Oxidkeramik

Die Erfindung betrifft eine Welle aus Oxidkeramik für stopfbuchslose Pumpen, insbesondere Heizungsumwälzpumpen, die an einem Wellenende außerhalb des Wellenlagers eine Angriffsfläche für ein Werkzeug zur Verdrehung der Welle aufweist.

Stopfbuchslose Pumpen laufen in einem in sich gekapselten Gehäuse, bei dem das Fördermedium gleichzeitig das Schmiermedium für die Lager der Pumpenwelle ist. Flüssigkeitspumpen dieser Art sind im allgemeinen mit einem Spaltrohrmotor ausgerüstet, d.h. daß auch der Motor durch das Fördermedium gekühlt wird und die Motorlagerung gleichzeitig die Lagerung der Pumpenwelle ist, da Pumpenrotor und Motorrotor auf der gleichen Welle angeordnet sind. Da die Vielzahl der zur Verfügung stehenden Fördermedien in vielen Fällen nicht absolut sauber gehalten werden kann und sich darin sehr leicht Spuren von Sand, abgeblätterte Kalk- und Rostablagerungen aus dem Rohrleitungssystem usw. befinden, war eine vordringliche Aufgabe der Konstrukteure darin zu sehen, eine Wellen- und Lagerkombination zu schaffen, die sowohl den chemischen Beanspruchungen als auch den mechanischen Beanspruchungen durch die Fremdstoffe im Fördermedium standhielt. Diese Aufgabe wurde durch einen in der DE-A 15 28 640 enthaltenen Vorschlag gelöst, gemäß dem die Wellen und die Lager einer Heizungsumwälzpumpe aus gesinterter Oxidkeramik bestehen.

Statt einer massiven Ausführung der Pumpenwelle aus gesinterter Oxidkeramik ist es möglich, in eine Stahlhohlwelle von beiden Seiten Lagerzapfen einzubringen (DE-A 23 03 608) oder auf eine Stahlwelle entsprechende keramische Wellhülsen aufzukleben.

Dadurch, daß zwei gleich harte Materialien aufeinander laufen, tritt weder bei den Gleitlagern noch bei den zugehörigen Wellen ein hoher Verschleiß auf, so daß sich durch diesen Vorschlag eine ausgezeichnete Lösung des seit langer Zeit bestehenden Problemes abzeichnete. In der Zwischenzeit ergab sich jedoch eine neue Problemstellung, da insbesondere Heizungsumwälzpumpen, anhand deren die nachfolgende Beschreibung der Erfindung abgehandelt wird, ohne sie darauf zu beschränken, in den Sommermonaten ausgeschaltet werden, so daß die Pumpe längere Zeit stillsteht. In dieser Zeit setzt sich im Rotorraum der Pumpe häufig eine Vielzahl von Fremdstoffen ab, wodurch die Pumpe blockiert wird und auch nach Einschalten des Stromkreislaufes aus eigener Kraft nicht mehr anlaufen kann.

Gemäß der DE-A 27 17 392 erfolgt das Deblockieren der Keramikwelle einer Pumpe durch das Aufsetzen eines Schlüssels auf das als konischen Vielkant ausgeführte Wellenende oder durch Einführung eines Kreuzschlitzschraubenziehers in die kreuzförmige Ausnehmung einer Stirnseite der Welle aus Oxidkeramik. Das zur Verfügung stehende Drehmoment für die Deblockierung einer festsitzenden Welle ist aber durch die Biegebruchfestigkeit der Keramik begrenzt. Bei den üblichen geringen Wellendurchmessern für die Pumpen, die im Bereich von 12 mm liegen, ist das erforderliche Drehmoment zur Deblockierung jedoch größer als die vorhandene Festigkeit. Bei den beiden Alternativen,

a) Außenvielkant,

b) Innenschlitz, bzw. Innenkreuz, kann daher die Biegebruchfestigkeit überschritten werden, was einen Bruch der Kanten des Vielkantes, bzw. eine Rißbildung von den Kreuzecken zur Peripherie zur Folge hat. Durch dieses Ausbrechen kann nicht nur die Pumpenwelle, sondern nach kurzer Laufzeit auch das Lager der Pumpe beschädigt werden, so daß die Pumpe als solche ausgetauscht werden muß.

Aufgabe der vorliegenden Erfindung ist es, diesen Nachteil an Keramikpumpenwellen zu vermeiden, d.h., ein Deblockieren von Pumpen, die mit Wellen aus gesinterter Oxidkeramik ausgerüstet sind, zu ermöglichen, ohne daß eine Beschädigung von Welle und/oder Lager erfolgt.

Erfindungsgemäß wird diese Aufgabe bei einer Welle aus Oxidkeramik der eingangs erwähnten Gattung dadurch gelöst, daß die Angriffsfläche auf einer mit einem Boden versehenen Metallhülse ausgebildet ist, die auf einen Ansatz am Wellenende aufgebracht ist.

Durch das Aufbringen einer Metallhülse auf die Welle aus Oxidkeramik ist es möglich, mit mechanischen Mitteln an der Metallhülse anzugreifen und so die empfindliche Keramikwelle nicht zu beschädigen. Die Verbindung zwischen der Welle aus Oxidkeramik und der Metallhülse kann auf vielfältige Weise erfolgen. So ist es beispielsweise möglich, die Metallhülse nach einem Metallisieren der Keramikwelle aufzulöten. Bei geringerer Beanspruchung kann auch ein Verkleben zwischen Welle und Metallhülse zum Erfolg führen. Gemäß einer besonders bevorzugten Ausgestaltung der Erfindung wird jedoch die Metallhülse auf die Welle aufgeschrumpft.

Sinteroxidkeramik, beispielsweise hochreine Aluminiumoxid-Sinteroxidkeramik, weist eine extrem hohe Druckfestigkeit auf, wogegen die Zugfestigkeit wesentlich geringer ist. Es ist also möglich, durch Aufschrumpfen einer Metallhülse auf eine Welle aus Sinteroxidkeramik einen so festen Verbund zwischen Metallhülse und Welle zu schaffen, daß dieser allen geforderten Beanspruchungen standhält. Als weiterer Vorteil ergibt sich dabei, daß keine zusätzlichen Materialien wie Kleber oder Lot, aufgebracht werden müssen, sondern die Verbindung eben nur durch das Schrumpfen des erhitzten Metalles der Metallhülse erfolgt, wobei noch weiter als Positivum dazukommt, daß dieser Aufschrumpfungsvorgang ein recht einfacher Arbeitsvorgang ist. Durch das Aufschrumpfen der Metallhülse ist sichergestellt, daß selbst bei überhöhter Betriebstemperatur und unterschiedlichem Ausdehnungskoeffizienten der beiden Werkstoffe eine feste Verbindung erreicht ist, die ein Drehmoment von mindestens 0,9 mkp erreicht. Das erforderliche Drehmoment bei Heizungsumwälzpumpen dürfte üblicherweise zwischen 0,5 und 0,7 mkp liegen, ein Deblokkieren der Welle ist damit mit Sicherheit gewährleistet.

Eine vorteilhafte Ausgestaltung der Erfindung sieht vor, daß der Außendurchmesser der Metallhülse kleiner als der Außendurchmesser der Welle ist. Diese Ausführungsform gestattet das Durchführen der Welle durch ein Lager, so daß die Metallhülse nicht mit dem Lager in Berührung kommt, daß vielmehr ein Spiel zwischen Metallhülse und Lager ist, in dem sich keine Fremdstoffe festsetzen können.

Zweckmäßig ist der Boden der Metallhülse mit einer Ausnehmung versehen, wobei die Ausnehmung üblicherweise die Form eines Schlitzes aufweist, um in diesen Schlitz einen Schraubenzieher einführen zu können und die Welle damit zu deblockieren. Selbstverständlich sind andere Ausführungsformen denkbar. So ist es beispielsweise sinnvoll, statt eines rechteckigen Schlitzes eine sechseckige Bohrung einzubringen, wodurch die Welle mit einem Innen-Sechskant-Schlüssel, sogenannten Inbusschlüssel deblockiert werden kann.

Die Welle selbst ist vorzugsweise als Hohlwelle ausgeführt, was den Vorteil ergibt, daß das Fördermedium sich durch die Welle hindurch auf die andere Seite des Lagers verteilen kann, um hier von der anderen Lagerseite ebenfalls die Kühl- und Schmierfunktion des Lagers zu übernehmen. Desweiteren ergibt sich dadurch der Vorteil, daß durch die Welle hindurch die Pumpe entlüftet werden kann.

Besonders vorteilhaft ist es, wenn der Ansatz der Welle außerhalb des Lagers angeordnet ist. Da der Ansatz von der Metallhülse umgeben ist, besteht immer die Gefahr, daß diese oxidiert oder sich Fremdstoffe an ihr anlagern. Die Gefahr, daß dadurch das Lager in seiner Funktion beeinträchtigt wird, besteht nicht, wenn diese Anlagerung von Fremdstoffen außerhalb des Lagerraumes erfolgt, wodurch dann die Funktion der Pumpe nicht beeinträchtigt wird.

Die Erfindung wird nachstehend anhand der Zeichnungen näher beschrieben :

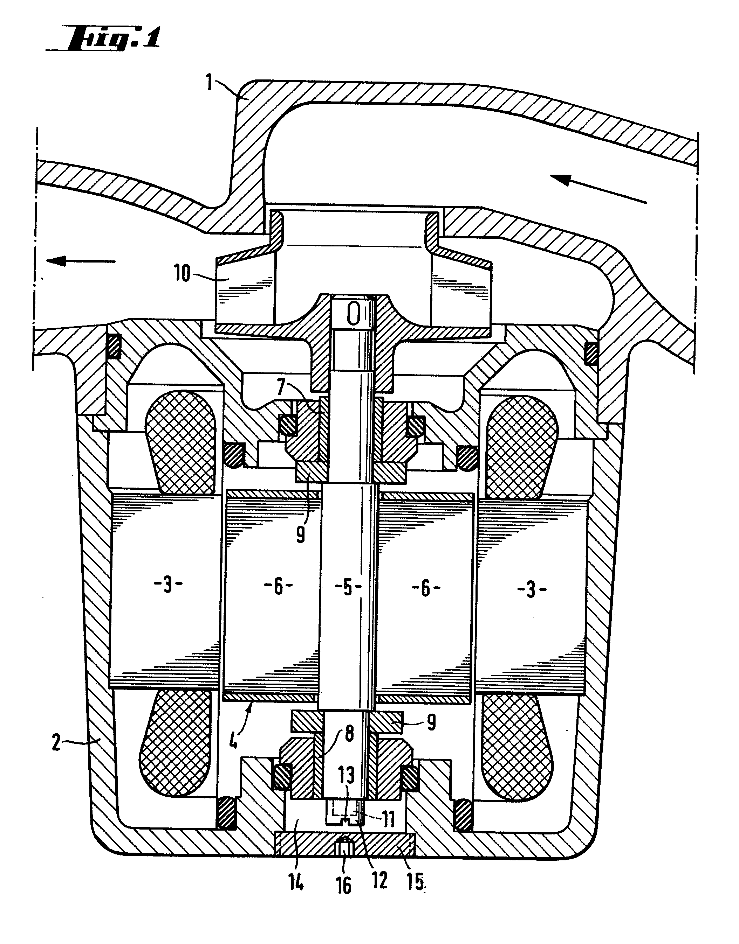

Figur 1 zeigt einen Schnitt durch eine Heizungsumwälzpumpe,

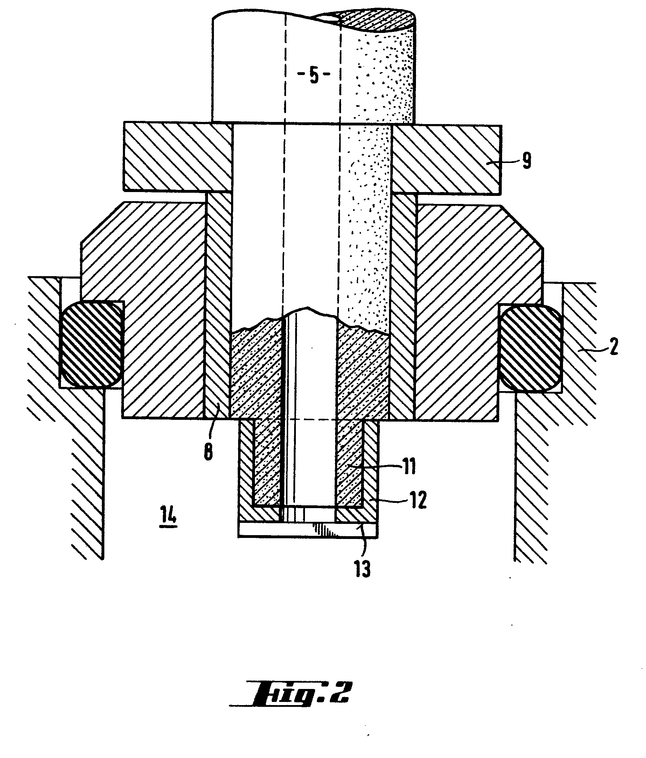

Figur 2 zeigt als Detail die Lagerung der gleichen Pumpe.

An das Pumpengehäuse 1 ist der Motorblock 2 angeflanscht, der den Stator 3 und den Rotor 4 enthält. Der Rotor 4 besteht aus dem Blechpaket 6 und der Welle 5. Die Welle 5 besteht aus gesinterter Oxidkeramik und ist in Lagerbuchsen 7 bzw. 8 gelagert, die ebenfalls aus gesinterter Oxidkeramik bestehen und weist zusätzlich Anlaufscheiben 9 auf. Die Lagerbuchse 7 nimmt dabei die durch das Laufrad 10 verursachten Radialkräfte auf. Die Axialkräfte werden über die Anlaufscheiben 9 auf beide Lagerbuchsen 7 und 8 verteilt.

Gegenüber dem Laufrad 10 ist auf der Welle 5 ein Zapfen 11 angeordnet, der eine Metallhülse 12 trägt. Zur Deblockierung weist die Metallhülse 12 einen Schlitz 13 auf, so daß mittels eines Schraubenziehers die Welle 5 gedreht werden kann.

Durch die Lagerbuchse 8 wird im Motorblock 2 ein Hohlraum 14 gebildet, in dem sich der Zapfen 11 dreht. Dieser Hohlraum 14 wird durch eine in den Motorblock 2 eingeschraubte Abdeckplatte 15, die zum Einschrauben mit einer Sechskantausnehmung 16 ausgerüstet ist, abgedichtet.

## Ansprüche

1. Welle (5) aus Oxidkeramik für stopfbuchslose Pumpen, insbesondere Heizungsumwälzpumpen, die an einem Wellenende außerhalb des Wellenlagers eine Angriffsfläche (13) für ein Werkzeug zur Verdrehung der Welle aufweist, dadurch gekennzeichnet, daß die Angriffsfläche (13) auf einer mit einem Boden versehenen Metallhülse (12) ausgebildet ist, die auf einen Ansatz (11) am Wellenende aufgebracht ist.

2. Welle nach Anspruch 1, dadurch gekennzeichnet, daß die Metallhülse (12) aufgeschrumpft ist.

3. Welle nach Anspruch 1 oder 2, dadurch gekennzeichnet, daß der Außendurchmesser der Metallhülse (12) kleiner als der Außendurchmesser der Welle (5) ist.

4. Welle nach einem der Ansprüche 1 bis 3, dadurch gekennzeichnet, daß der Boden der Metallhülse (12) mit einer Ausnehmung (13) zum Ansatz des Werkzeuges versehen ist.

5. Welle nach einem der Ansprüche 1 bis 4, dadurch gekennzeichnet, daß die Welle (5) als Hohlwelle ausgeführt ist.

6. Welle nach einem der Ansprüche 1 bis 5, dadurch gekennzeichnet, daß der Ansatz (11) der Welle (5) außerhalb der Wellenlager angeordnet ist.

## Claims

1. Oxide ceramic shaft (5) for glandless pumps, especially circulation pumps for heating installations, which have, at one end of the shaft outside the shaft bearing, an engagement surface (13) for a tool for turning the shaft, characterised in that the working surface (13) is formed on a metal sleeve (12) which is provided with a base and is attached to a projection (11) at the end of the shaft.

2. Shaft according to claim 1, characterised in that the metal sleeve (12) is shrunk on.

3. Shaft according to claim 1 or 2, characterised in that the external diameter of the metal sleeve (12) is smaller than the external diameter of the shaft (5).

4. Shaft according to one of claims 1 to 3,

5          **0 021 030**          6

characterised in that the base of the metal sleeve (12) is provided with a recess (13) for the projection on the tool.

5. Shaft according to one of claims 1 to 4, characterised in that the shaft (5) is designed as a hollow shaft.

6. Shaft according to one of claims 1 to 5, characterised in that the projection (11) of the shaft (5) is located outside the shaft bearing.

**Revendications**

1. Arbre (5) en céramique d'oxyde pour pompes sans presse-étoupes, notamment pompes de circulation de chauffage, muni à l'une de ses extrémités, à l'extérieur de son palier, d'une surface d'attaque (13) pour un outil destiné à le faire tourner, caractérisé par le fait que la surface d'attaque (13) est formée sur une douille métallique (12) pourvue d'un fond qui est rapportée sur un prolongement (11) de ladite extrémité de l'arbre.

2. Arbre selon la revendication 1, caractérisé par le fait que la douille métallique (12) est emmanchée à chaud.

3. Arbre selon l'une quelconque des revendications 1 ou 2, caractérisé par le fait que le diamètre extérieur de la douille métallique (12) est inférieur à celui de l'arbre (5).

4. Arbre selon l'une quelconque des revendications 1 à 3, caractérisé par le fait que le fond de la douille métallique (12) est muni d'un évidement (13) pour la venue en prise de l'outil.

5. Arbre selon l'une quelconque des revendications 1 à 4, caractérisé par le fait qu'il est réalisé en arbre creux.

6. Arbre selon l'une quelconque des revendications 1 à 5, caractérisé par le fait que son prolongement (11) est placé à l'extérieur du palier de ce dernier.

4

# Fig. 1

**Fig.2**